Europäisches Patentamt

European Patent Office

Office européen des brevets

(11) Publication number: **0 451 392 A1**

# EUROPEAN PATENT APPLICATION

(21) Application number: 90303929.5

(22) Date of filing: 11.04.90

(51) Int. Cl.5: **B05B 1/30**, B05B 3/10, F16K 3/32

(43) Date of publication of application:
16.10.91 Bulletin 91/42

(84) Designated Contracting States:
AT BE CH DE DK ES FR GB GR IT LI LU NL SE

(71) Applicant: **NOMIX-CHIPMAN LIMITED**
Portland Building, Portland Street
Staple Hill, Bristol BS16 4PS(GB)

(72) Inventor: **Ali, Eren**
6 Gordon Road
Clifton, Bristol BS8 1AP(GB)

(74) Representative: **Cheyne, John Robert
Alexander Mackenzie et al
HASELTINE LAKE & CO. Hazlitt House 28,
Southampton Buildings Chancery Lane
London WC2A 1AT(GB)**

(54) Metering valves.

(57) A metering valve comprises two cooperating components 32, 34 which are spring-loaded into engagement with each other. The component 32 has a metering groove 36 which varies in cross-section along its length. The metering groove 46 cooperates with a channel 52 in the other component 34. Liquid entering the valve flows through a duct 17 and a supply groove 48 to the metering groove 46. Liquid then flows from the metering groove 46 to the channel 52 to an outlet 20. The flow rate of the liquid is adjusted by rotating the component 32 relatively to the component 34, so altering the position of the channel 52 relatively to the metering groove 46.

One use of the valve is to control the flow of herbicide in herbicide delivery equipment.

FIG.8

This invention relates to metering valves and is particularly, although not exclusively, concerned with valves in horticultural or agricultural delivery equipment for metering the flow of herbicides or other agrochemicals.

In herbicide delivery equipment, it is important for the flow of herbicide to be accurately controlled, so that enough herbicide is delivered to have the desired effects on plants which are treated, while avoiding waste and the possible environmental damage which might result from applying an excess of the herbicide.

A metering valve for herbicide delivery equipment is disclosed in EP0195632. That valve comprises first and second components which are rotatable relatively to each other about a rotary axis, the components having respective passageways for connecting the valve to a fluid line, the passageway in the first component comprising a metering groove formed in a surface of that component, which surface engages a complementary surface of the second component, the metering groove varying in cross-section along its length and cooperating with the passageway in the second component to vary the minimum flow cross-section between the passageways.

In the valve disclosed in EP0195632, the metering groove extends circumferentially and the passageway in the second component comprises a duct which extends generally parallel to the rotary axis, and opens at a port which is on the same radius as the circumferentially extending metering groove. As a result, it is difficult to design the valve so that both the inlet and the outlet connections are aligned with the rotary axis.

Furthermore, the metering groove is provided in a flat surface of the first component which extends transversely of the rotary axis. It is thus difficult to provide adequate sealing to prevent the liquid from creeping between the complementary surfaces in undesired directions.

A further disadvantage of the valve disclosed in EP0195632 is that it has no provision for providing a relatively high flow rate, compared with that used in normal use of the equipment in which the valve is provided. Such high rates of flow are sometimes desirable, for example in order to free blockages within the valve, or to provide effective cleaning using a cleaning fluid.

According to the present invention, the passageway in the second component comprises a channel formed in the complementary surface of the second component.

This channel crosses the metering groove in the first component, the position of the channel along the metering groove determining the flow rate of liquid through the valve.

In a preferred embodiment, the cooperating surfaces of the first and second components are conical. For example, the surface on the first component may comprises a conical projection with the groove formed on the outer surface of the projection. The surface on the second component is then a conical recess, the channel being formed on the internal surface of the recess.

The metering groove is preferably connected to a supply groove which lies in a plane containing the rotary axis. The radially outer end of this supply groove may be connected to the metering groove, and the radially inner end of the supply groove may be connected to a connection duct for connecting the valve to a fluid line. The connection duct may be provided in a spigot which projects axially from the first component in the direction away from the second component.

The channel in the second component may extend in a plane which contains the rotary axis. It may open into a connection duct which is aligned with the rotary axis. The connection duct may discharge into a calibration vessel which enables checking of the flow rate through the valve.

The first and second components may be resiliently biased relatively to each other in order to press the complementary surfaces into contact. Provision may be made for separating the complementary surfaces in order to permit free flow of liquid between those surfaces.

For a better understanding of the present invention, and to show how it may be carried into effect, reference will now be made, by way of example, to the accompanying drawings, in which:

Figure 1 is a view of one side of a delivery assembly for herbicide delivery equipment;

Figure 2 is a view of the other side of the delivery assembly;

Figure 3 is a sectional view of the delivery assembly in one operative condition;

Figure 4 corresponds to Figure 3 but shows the delivery assembly in another operative condition.

Figure 5 shows a component of a metering valve provided in the delivery assembly of Figures 1 to 4;

Figure 6 is a view in the direction of the arrow VI in Figure 5;

Figure 7 is a diagrammatic view of the metering valve; and

Figure 8 is a sectional view of the metering valve.

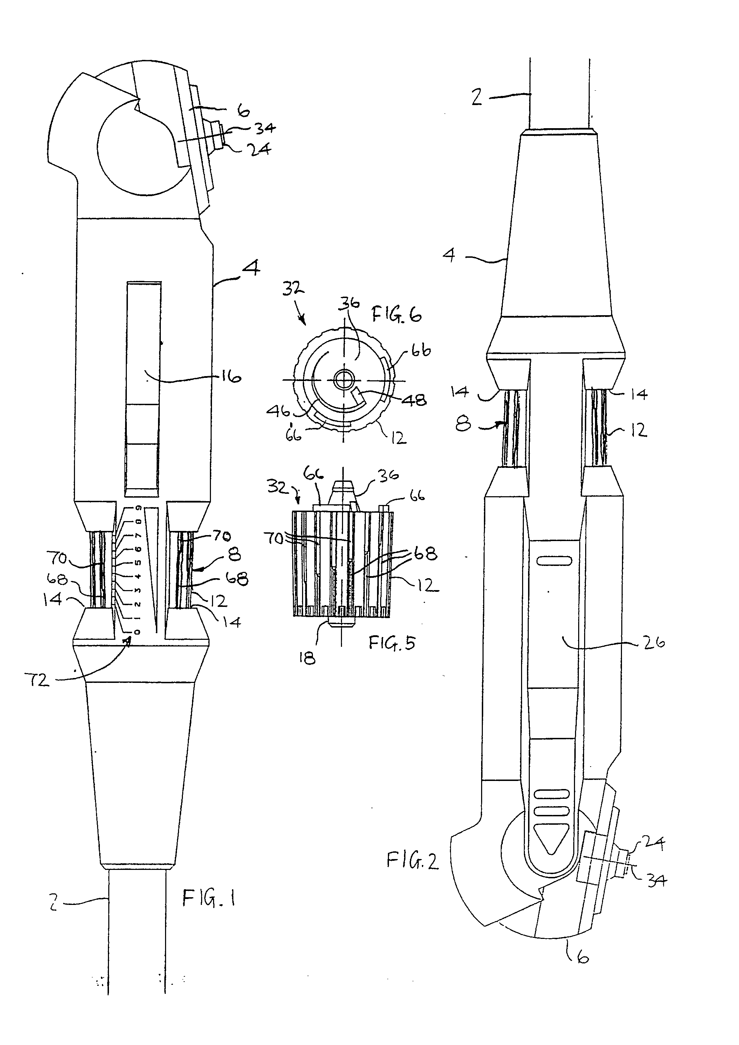

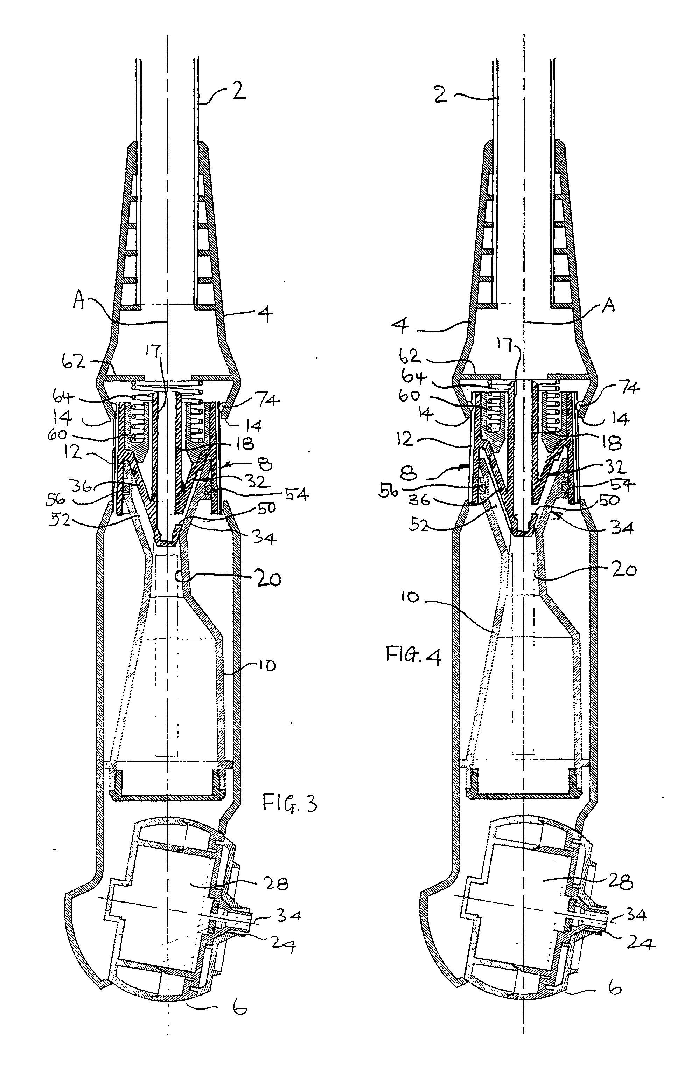

The assembly shown in Figures 1 to 4 is mounted on one end of a support tube 2. At the opposite end of the support tube 2, there is a handset (not shown) to enable the equipment to be carried by a pedestrian operator. Equipment of this kind is shown, by way of example, in British Patent Application No. 8903243.7. The assembly comprises a housing 4 which is secured at one end to the support tube 2 and which carries, at the other end, a delivery head 6. The housing also accommodates a metering valve 8 and a calibration vessel 10. The metering valve 8 is adjustable manually by means of a knurled ring 12 which is accessible through openings 14 on opposite sides of the housing 4. A further opening 16 is provided in the housing, through which part of the wall of the calibration vessel 10 is visible, the calibration vessel 10 itself being made from transparent material.

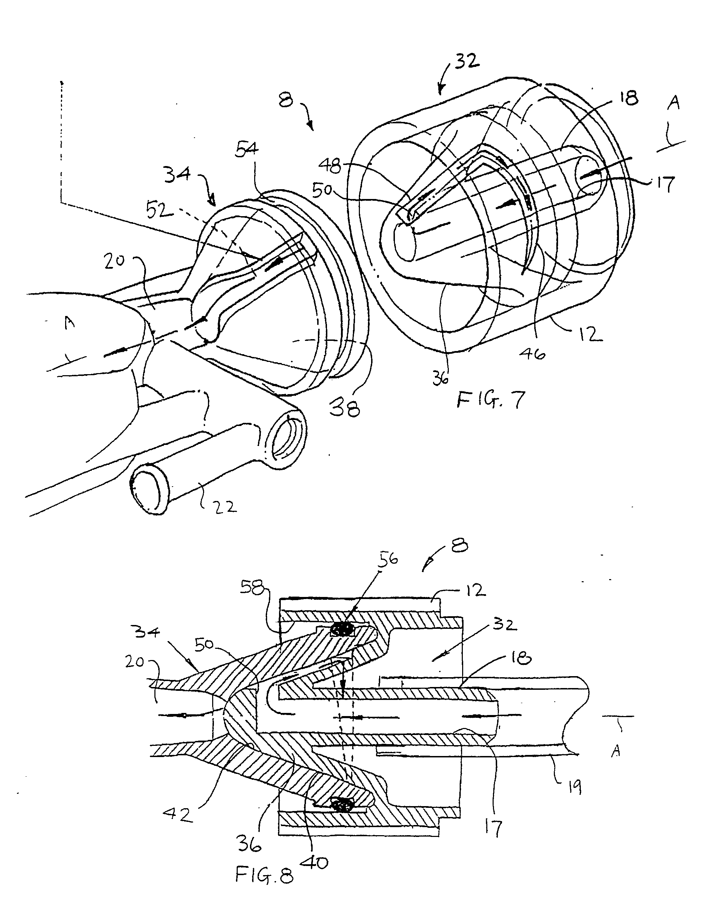

The metering valve 8 has a connecting duct 17 formed in an inlet spigot 18 on which is fitted a supply tube 19 (Figure 8) which extends from the handset through the support tube 2. A further connecting duct 20 serves as the outlet of the metering valve 8 and opens into the calibration vessel 10. The calibration vessel 10 itself has an outlet spigot 22 (Figure 7) which is connected by a flexible tube (not shown) to internal passageways in the delivery head 6 which provide communication between the calibration vessel 10 and an outlet 24 of the delivery head 6. The flexible tube is accommodated in a projecting part 26 of the housing 4.

The delivery head 6 accommodates an electric motor 28 which drives a spinning disc (not shown) about an axis 34.

The metering valve 8 comprises a first component 32, which is provided with the inlet spigot 18 and the knurled ring 12, and a second component 34, which is formed integrally with the calibration vessel 10 and the outlet 20. The first component 32 is rotatable about a rotary axis A relatively to the second component 34.

The first component 32 has a conical projection 36 which is connected at its radially outer edge to the knurled ring 12. The inlet spigot 18 extends rearwardly from the projection 36.

The second component 34 has a conical recess 38 within which the projection 36 is received, the projection 36 and the recess 38 having complementary surfaces 40 and 42 respectively.

The surface 40 of the projection 36 is formed with a metering groove 46 and a supply groove 48. The metering groove 46 extends circumferentially for part of the way around the projection 36. It adjoins the supply groove 48 at one end, and its cross-section decreases continuously in the direction away from the supply groove 48. The supply groove 48 extends away from the metering groove 46 in a plane which contains the rotary axis A. At the end away from the metering groove 46, which is the end nearer the vertex of the conical projection 36, the supply groove 48 is connected by an opening 50 to the connecting duct 17 passing through the inlet spigot 18.

A channel 52 is formed in the surface 42 of the conical recess 38 in the second component 34.

Like the supply groove 48, the channel 52 lies in a plane which contains the rotary axis A. The channel 52 is closed at its radially outer end, and opens, at its radially inner end, into the connecting duct 20.

At its radially outer periphery, the second component 34 is provided with a groove 54 which contains a sealing ring 56. In the assembled configuration, as shown in Figure 8, the sealing ring 56 is in liquid-tight contact with the inner cylindrical surface 58 of the knurled ring 12.

As shown in Figures 3 and 4, an annular cup 60 is received within the first component 32. A partition 62 is formed integrally with the housing 4, and a spring 64 acts between the partition 62 and the cup 60. The calibration vessel 10 is fixed within the housing 4, and consequently the spring 64 acts to bias the first component 32 into the second component 34, so that the complementary faces 40 and 42 are pressed into contact with each other.

As shown in Figures 5 and 6, the first component 32 has lugs 66 projecting from one axial face, which cooperate with abutments (not shown) formed within the housing 4, to limit rotation of the first component 32 relatively to the second component 34. The knurled ring 12 has axial grooves 68 formed around its periphery, which grooves contain fillets 70. The fillets 70 extend from one axial end of the knurled ring 12 and have progressively varying lengths, compared one with another. Adjacent the knurled ring 12, on the housing 4, there is a graduated scale 72.

For operation, the equipment is held with the delivery head 6 disposed near the ground, or near a plant to be treated. A distribution disc (not shown), is fitted to the head 6 so as to be driven in rotation by the motor 28. Herbicide to be delivered is fed from a container carried by the operator to the outlet 24, from which it flows to the disc. To reach the outlet 24, the herbicide flows through the supply tube 19 and the valve 8 to the calibration vessel 10, whence it flows through the spigot 22 to the delivery head 6.

The rate of flow of herbicide to the delivery head 6 is controlled by the metering valve 8. When the valve is closed, the knurled ring 12 is rotated in one direction to its limit position, in which the channel 52 does not intersect the metering groove 6. As the first component 32 is rotated away from this limit position, the narrowest end of the metering groove 46 moves across the channel 52, and continued rotation of the first component 32 increases the cross-sectional area of the metering groove 46 exposed to the channel 52, which, in turn, increases the flow rate of herbicide through the valve. The rotational position of the knurled ring 22, and consequently the extent of opening of the valve 8, can be determined visually from the fillets 70. Thus, the position of the end of the fillet 70 nearest the graduated scale 72 provides an indication of flow rate.

In order to check that the flow rate determined by means of the graduated scale 72 matches the flow rate required for a particular herbicide delivery operation, the calibration chamber 10 can be emptied and then the equipment can be operated to deliver herbicide into the calibration vessel 10 for a predetermined time, such as 30 seconds. The calibration chamber 10 is graduated, and consequently the volume of herbicide flowing into the calibration chamber 10 in the predetermined time can be established by observation through the opening 16. If the actual flow rate varies significantly from the desired flow rate, the valve 8 can be adjusted appropriately until the correct flow rate is achieved.

The action of the spring 64 on the first component 32 presses the complementary surfaces 40 and 42 together, which prevents significant leakage of herbicide across these surfaces. The flow of herbicide is thus confined to the grooves 46 and 48, and the channel 52. Any migration of herbicide from the grooves 46 and 48 or the channel 52 is prevented from reaching the exterior of the valve 8 by the sealing ring 56.

After a herbicide distribution operation is completed, it is desirable to flush the equipment in order to remove all traces of the herbicide. This is achieved using a cleaning fluid and it is desirable, for adequate cleaning of the equipment, for the flow rate of cleaning fluid to be significantly in excess of the maximum flow rate of herbicide during normal use of the equipment. Also, to avoid any possible seizing up of the valve 8, it is desirable for any herbicide which has migrated between the complementary surfaces 40 and 42 to be removed.

For cleaning purposes, the first component 32 can be pulled away from the second component 34 against the action of the spring 64. This separates the surfaces 40 and 42, and allows the cleaning fluid to flow between them. Also, the relatively rapid flow rate of cleaning fluid provides a thorough cleaning action, both in the valve 8 and in other parts of the equipment, for example in the passages provided in the delivery head 6. In order to retain the first component 32 in the retracted position, as shown in Figure 4, cooperating formations may be provided on the knurled ring 12 and the adjacent part of the housing 4. For example, a groove (not shown) in the knurled ring 12 may, in the retracted position of the first component 32, be brought into engagement with projections 72 on the housing 4, by rotation of the knurled ring 12.

## Claims

1. A metering valve (8) comprising first and second components (32, 34) which are rotatable relatively to each other about a rotary axis (A), the components having respective passageways for connecting the valve to a fluid line, the passageway in the first component (32) comprising a metering groove (46) formed in a surface (40) of that component (32) which surface (40) engages a complementary surface (42) of the second component (34), the metering groove (46) varying in cross-section along its length and cooperating with the passageway (52) in the second component (34) to vary the minimum flow cross-section between the passageways (46, 52), characterized in that the passageway (52) in the second component (34) comprises a channel formed in the complementary surface (42) of the second component (34).

2. A metering valve as claimed in claim 1, characterized in that the cooperating surfaces (40, 42) of the first and second components (32, 34) are conical.

3. A metering valve as claimed in claim 2, characterized in that the surface (40) on the first component (32) is provided on a conical projection (36), and in that the complementary surface (42) on the second component (34) comprises the wall of a conical recess (38).

4. A metering valve as claimed in any one of the preceding claims, characterized in that the metering groove (46) communicates with a supply groove (48) provided in the first component (32).

5. A metering valve as claimed in claim 4, characterized in that the supply groove lies in a plane containing the rotary axis (A).

6. A metering valve as claimed in claim 4 or 5, characterized in that the supply groove (48) is connected at one end to the metering groove (46) and at the other end to a connecting duct (17) provided in the first component (32).

7. A metering valve as claimed in claim 6, characterized in that the connecting duct (17) is formed in a spigot (18) which is aligned with the rotary axis (A) and extends in the direction away from the second component (34).

8. A metering valve as claimed in any one of the preceding claims, characterized in that the channel (52) lies in a plane which contains the rotary axis (A).

9. A metering valve as claimed in any one of the preceding claims, characterized in that the first and second components (32, 34) are resiliently biased relatively to each other in the direction to maintain contact between the complementary surfaces (40, 42), the first and second components being relatively displacable against the resilient bias to enable increased flow of liquid through the valve.

10. Equipment for delivering a liquid, including a metering valve in accordance with any one of the preceding claims for controlling the flow rate of the liquid.

FIG. 1

FIG. 6

FIG. 5

FIG. 2

FIG. 3

FIG. 4

FIG. 7

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 195 632 (GILL)<br>* the whole document *<br>— — — — — | 1 | B 05 B 1/30<br>B 05 B 3/10<br>F 16 K 3/32 |
| | | | **TECHNICAL FIELDS SEARCHED (Int. Cl.5)**<br><br>B 05 B<br>F 16 K |

The present search report has been drawn up for all claims

| Place of search | Date of completion of search | Examiner |
|---|---|---|
| The Hague | 09 November 90 | JUGUET J.M. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons
 
& : member of the same patent family, corresponding
document